# EUROPEAN PATENT APPLICATION

(11) **EP 4 477 880 A1**
(43) Date of publication of application: **18.12.2024**
(21) Application number: 23179400.9
(22) Date of filing: 15.06.2023
(51) Int. Cl.: F03D 80/60, F03D 9/19, C25B 1/04

(54) **OFFSHORE ARRANGEMENT BEING A WIND TURBINE AND/OR A HYDROGEN PRODUCTION UNIT, METHOD FOR MOUNTING AN OFFSHORE ARRANGEMENT, AND OFFSHORE WIND PARK**

(71) Applicant: Siemens Gamesa Renewable Energy A/S, 7330 Brande (DK)
(72) Inventor: Scheel, Joergen, 7000 Fredericia (DK); Soerensen, Johnny, 6920 Videbaek (DK)
(74) Representative: SGRE-Association

(57) **Abstract**

Offshore arrangement being a wind turbine (2) and/or a hydrogen production unit (21), wherein at least one heat producing component (9) is coupled with at least one cooling circuit (10) such that heat is transferrable from the at least one component (9) to a cooling fluid circulating in the cooling circuit (10), characterized in that at least one cooling duct (15) of the cooling circuit (10) in which the cooling fluid is guided is buried in the seabed (13) such that heat is transferrable from the cooling fluid to the seabed material

## Description

The present invention relates to an offshore arrangement being a wind turbine and/or a hydrogen production unit, wherein at least one heat producing component is coupled with at least one cooling circuit such that heat is transferable from the at least one component to a cooling fluid circulating in the cooling circuit. Additionally, the present invention relates to a method for mounting an offshore arrangement being an offshore wind turbine and/or an offshore hydrogen production unit, wherein at least one heat producing component of the offshore arrangement is coupled with at least one cooling circuit such that heat is transferable from the at least one component to a cooling fluid circulating in the cooling circuit. Furthermore, the present invention relates to an offshore wind park.

Offshore arrangements like wind turbines or a hydrogen production units comprise components which produce heat, particularly because of electric currents. Hence, there is the need of cooling these components. A known technique regarding the respective cooling is providing seawater which is used as a cooling medium. Additionally or alternatively, air cooling radiators can be used. However, these techniques have some disadvantages. For instance, a layer of particles can grow inside a heat exchanger through which seawater is guided. Outside of the heat exchanger, which might be located submerged, marine growth can occur. Both effects negatively affect the cooling efficiency. Regarding air cooling, corrosion can occur, particularly because of the high humidity of the ambient air of the offshore arrangement. These negative effects cause the need of additional offshore maintenance work, which is cumbersome.

It is an object of the present invention to provide an enhanced concept regarding the cooling of heat producing components of an offshore arrangement, particularly with respect to reduce the need of maintenance work.

This object is achieved by an offshore arrangement as initially described, wherein at least one cooling duct of the cooling circuit in which the cooling fluid is guided is buried in the seabed such that heat is transferable from the cooling fluid to the seabed material.

One central idea of the present invention is to use the cooling duct as a means for expelling heat from the cooling circuit into the environment or vicinity of the offshore arrangement, namely into the seabed. Hence, a great part or most of the heat which has been transferred from the component to the cooling fluid is transferred into the seabed, which typically consists of sand or other seabed material. Hence, an even distribution of excess from heat from the cooling circuit into the marine environment is realized.

The problems which have been addressed above are solved by the present invention. Since the cooling duct is arranged within the seabed material such that it is surrounded by this material from all sides, the cooling duct is arranged in a protected area with almost no marine growth and corrosion. Hence, the need of maintenance is significantly reduced, particularly since only a reburial is required if there is seabed material movement on the specific location of the offshore arrangement. At least the greatest part or preferably the complete cooling duct is buried in the seabed.

The cooling duct can lead at least 100 m, particularly at least 500 m, away from the remainder of the offshore arrangement, particularly from a tower or a structural component of the offshore arrangement which will be described later. In other words, the greatest distance between a certain part of the cooling duct and the remainder of the offshore arrangement, particularly the tower or the structural component, is at least 100 m, particularly at least 500 m. As a consequence, the heat is distributed over a large area of the seabed in the vicinity of the offshore arrangement. Additionally, a sufficient heat transfer from the cooling fluid to the seabed is ensured because of the large flowing path of the cooling fluid through the seabed material. Thus, the length of the cooling duct is preferably large enough, that no other cooling means are required to expel a sufficient amount of heat from the cooling circuit.

The offshore arrangement can be a wind turbine. Wind turbines are increasingly used for the generation of electrical energy. Generally, a wind turbine comprises a tower having a height of particularly several tens or even more than hundred meters and a nacelle that is mounted on top of the tower. The nacelle bears the rotor of the wind turbine which comprises a hub and a plurality of rotor blades attached to the hub. In the interior of the nacelle, mechanical and/or electrical components, particularly a wind turbine generator, for the generation and/or conversion of electrical energy are arranged. The hub is connected with a rotor of the wind turbine generator by a shaft such that a wind induced rotation of the hub is transferred to the wind turbine generator and the respective kinetic energy is converted into electrical energy by the wind turbine generator.

The offshore arrangement can be a hydrogen production unit. The hydrogen production unit typically comprises an electrolyzing device adapted to decompose water into oxygen and hydrogen gas by electrolysis using electrical energy. The hydrogen production unit can comprise a water treatment component to produce desalinated seawater which is subsequently used by the electrolyzing device. The produced hydrogen can be used as an energy storage, i.e., it can be stored and be used for production of electrical energy at a later time in situ. Alternatively, the produced hydrogen can be transferred to an onshore station by a hydrogen pipeline and subsequently be used as a fuel for vehicles, for industrial purposes or for energy supply purposes. The hydrogen production unit can comprise a platform carrying the electrolyzing device and being located on a structural component which is connected with or arranged on the seabed.

The offshore arrangement can be a wind turbine and a hydrogen production unit. In this embodiment, the electrical energy produced by the wind turbine generator can be used for the operation of the electrolyzing device.

The cooling circuit comprises a pump for circulating the cooling fluid in respective ducts. The heat producing component is thermally coupled with the cooling circuit or cooling fluid, respectively, such that heat which is produced by this component is transferred to the cooling fluid. A section of the cooling circuit, i.e., the cooling duct, runs through the seabed material such that the cooling circuit or cooling fluid, respectively, is thermally coupled with the seabed material such that heat is transferred from the cooling fluid to the seabed material. Hence, the cooling fluid is heated by thermal energy of the component and subsequently cooled down by transferring thermal energy into the seabed. After this, the cooling fluid is again guided to the component. The cooling fluid can be, particularly filtered, seawater or glycol.

The offshore arrangement according to the present invention can comprise a structural component being anchored in the seabed or being a gravity foundation positioned on the seabed. The structural component carries the tower of the wind turbine and/or the platform of the hydrogen production unit. If the structural component is anchored in the seabed, it can be a monopile foundation or a jacket foundation or a tripod foundation. If the structural component is a gravity foundation, the stability of this component being located on the seabed is realized by its own weight. The structural component and the tower and/or the platform can be connected by a transition piece.

Preferably, the cooling duct comprises a first section leading the cooling fluid away from the structural component and a second section leading the cooling fluid back to the structural component. In this embodiment, the cooling circuit preferably exits and enters the interior of the offshore arrangement via respective openings of the structural component, particularly at a position below the seabed level such that the cooling duct is completely buried in the seabed.

Preferably, the first section and the second section each comprise at least one, particularly straight, pipe, wherein the first section and the second section are connected by a, particularly bent, connecting tube. The first section, the second section and the connecting tube can be several components or can be realized by one single piece. The connecting tube can be U-shaped, i.e., it can realize a 180°-loop. The connecting tube can consist of a soft and bendable material.

At least a part of the cooling duct can be made of a plastic material, particular of a composite material, and/or of a metal, particularly of steel. Plastic material can be used to safe weight. The plastic material can realize the composite material, particularly comprising fibreglass. Metallic material typically comprises a high thermal conductivity such that an effective heat transfer from the cooling fluid to the seabed material is insured. Optionally, the cooling duct is made of a composite material comprising a plastic material and a metal.

In a possible embodiment of the present invention, the at least one component is coupled with the at least one cooling circuit by at least one heat exchanger. Preferably, the heat exchanger is a plate heat exchanger. The heat producing component is in thermal contact with the heat exchanger, wherein the cooling fluid is preferably guided through the heat exchanger, particularly through a pipe which runs through the heat exchanger. According to an optional embodiment, the at least one component can directly in contact with a pipe of the cooling circuit or with the cooling fluid such that a direct cooling is realized. In this embodiment a pipe which guides the cooling fluid is in a direct contact with the heat producing component. Particularly, the cooling fluid can get in direct contact with the heat producing component. Regarding the position within the cooling circuit where the pipe of the cooling circuit or the cooling fluid is in contact with the at least one component, the respective pipe can directly lead, i.e., without passing further components of the cooling circuit, to the cooling duct which is buried in the seabed.

The heat producing component can be the wind turbine generator or the electrolyzing device for producing hydrogen. Additionally or alternatively, the heat producing component can be a transformer. The transformer, which can be also named as a converter, is adapted to transfer electrical energy from one electrical circuit to another electoral circuit, particularly by changing the respective electrical voltage. In a possible embodiment, the transformer can be a step-down transformer which electrically connects the wind turbine generator and the electrolyzing device of the offshore arrangement being a wind turbine as well as a hydrogen production unit. The step-down transformer is adapted to transform a voltage from an output voltage of the wind turbine generator to an operating voltage of the electrolyzing device. For instance, the output voltage of the wind turbine generator can be in the order of tens of kV, e.g., 66 kV (AC), and the operating voltage of the electrolyzing device can be in the order of tenths of kV, e.g., 0.6 kV (DC).

As already mentioned, the heat producing component being the electrolyzing device can be arranged on the platform, particularly being carried by the structural component. A platform housing can be arranged on the platform, wherein the electrolyzing device can be arranged within the platform housing. Additionally or alternatively, that heat producing component being the wind turbine generator can be arranged within the nacelle, particularly being carried by the tower being arranged on the structural component.

In a possible embodiment of the present invention, at least one ambient heat exchanger is coupled with the cooling circuit such that heat is transferrable from the cooling fluid to the vicinity of the offshore arrangement, particularly to seawater or air, by the ambient heat exchanger. If heat is transferable to ambient air by the ambient heat exchanger, a fan can be provided for generating and ambient air current being directed to the ambient heat exchanger. The fan can be arranged on an inlet opening of the offshore arrangement, wherein particularly an outlet opening of the offshore arrangement is provided to allow the air current leaving the interior of the offshore arrangement. If heat is transferable to seawater by the ambient heat exchanger, fresh seawater can be pumped into the ambient heat exchanger by a seawater pump while the cooling fluid is also guided through the ambient heat exchanger. After this, the heated seawater can be guided back into the sea.

The operation of the ambient heat exchanger, particularly of the fan or the seawater pump can be only started if the cooling provided by the seabed material is not sufficient to transport enough heat from the heat producing component into the seabed. Particularly, the temperature of the cooling fluid, for instance after flowing through the cooling duct, can be measured, wherein, if this temperature is larger than a given threshold temperature, the operation of the ambient heat exchanger can be started to realize a booster cooling.

The object of the present invention is also achieved by a method as initially described, wherein at least one cooling duct of the cooling circuit in which the cooling fluid is guided gets buried in the seabed such that heat is transferrable from the cooling fluid to the seabed material. All advantages, features and aspects which are explained with respect to the offshore arrangement according to the present invention can be transferred to the method according to the present invention and vice versa.

Regarding the method according to the present invention, at least one hydrogen duct used for transporting produced hydrogen away from the offshore arrangement and/or at least one electrical cable used for electrically connecting the offshore arrangement with other facilities can get buried in the seabed together with the at least one cooling duct. In this embodiment, the process of burying the cooling duct together with the hydrogen duct and/or the electrical cable takes place during a common or combined operation step. Particularly, seabed material can be removed such that a ditch or tray is created on the seabed, wherein these components are arranged in the ditch or tray which is finally closed by filling it with seabed material. The cooling duct can be positioned such that a lateral distance is provided between the cooling duct and the hydrogen duct and/or the electrical cable. Hence, a sufficient heat transfer from the cooling duct to the seabed material and an unwanted heating of the hydrogen duct and/or the electrical cable due to the presence of the cooling duct in the respective vicinity is prevented.

The hydrogen duct and/or the electrical cable can connect the offshore arrangement with other offshore arrangements of an offshore wind park comprising these arrangements. Additionally or alternatively, the hydrogen duct and/or the electrical cable can connect the offshore arrangement with an onshore station or with a pipeline or a wire leading to an onshore station.

Furthermore, the object of the present invention is achieved by an offshore wind park comprising several wind energy production units, wherein at least one of the wind energy production units is an offshore arrangement according to the description above. All advantages, features and aspects which are explained with respect to the offshore arrangement according to the present invention and with respect to the method according to the present invention can be transferred to the offshore wind park according to the present invention and vice versa.

At least one of the wind energy production units can be a wind turbine being an offshore arrangement according to the description above. Additionally or alternatively, the wind energy production units are connected with a hydrogen production unit being an offshore arrangement according to the present invention. In this embodiment, the wind energy production units can be conventional wind turbines or wind turbines being offshore arrangements according to the present invention, wherein these wind turbines can be connected with the energy production unit by electrical cables such that the electrical energy produced by these wind turbines can be used for the operation of the electrolyzing device of the hydrogen production unit. Hence, the wind energy production units can be connected with each other by the electrical cables to transfer electricity between each other. The wind energy production units can be connected with each other by ducts to transfer hydrogen between each other. The offshore wind park can be connected with an onshore station by a hydrogen pipeline to transfer hydrogen to the land. The offshore wind park can be connected with the onshore station by an electric wire to transfer electricity to the land.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an offshore arrangement according to a first embod-iment of the present invention, wherein the off-shore arrangement is a wind turbine,
- Fig. 2: an offshore arrangement according to a second em-bodiment of the present invention, wherein the off-shore arrangement is a hydrogen production unit,
- Fig. 3: an offshore arrangement according to a third embod-iment of the present invention, wherein the off-shore arrangement is a wind turbine an and a hydrogen production unit,
- Fig. 4: an offshore wind park according to a first embodiment of the present invention, and
- Fig. 5: an offshore wind park according to a second embodiment of the present invention.

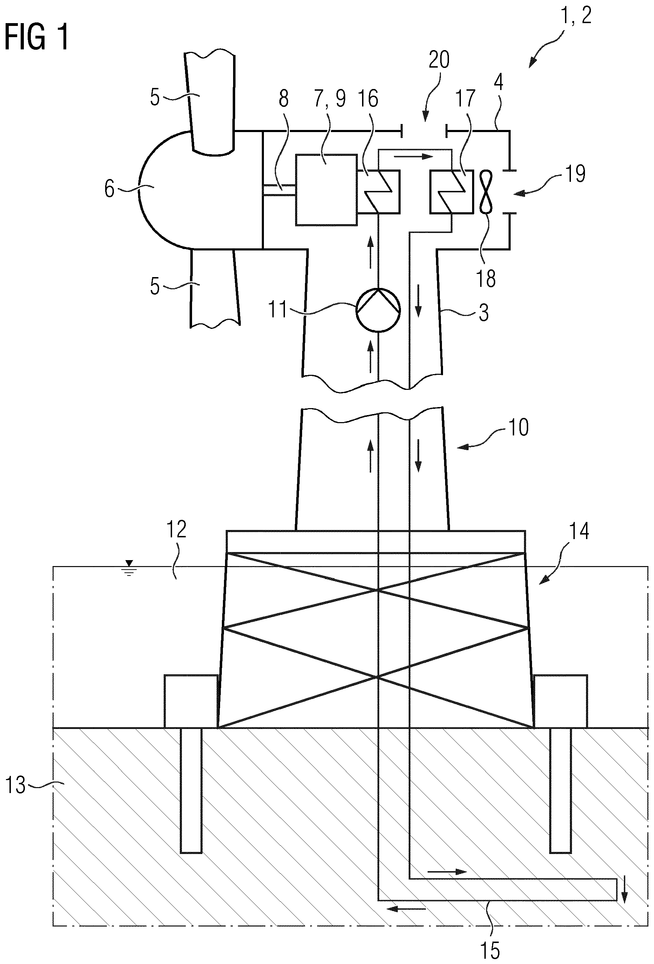

Fig. 1 shows an offshore arrangement 1 according to a first embodiment of the present invention. The offshore arrangement 1 shown in fig. 1 is a wind turbine 2 comprising a tower 3 and a nacelle 4 mounted on top of the tower 3. Several rotor blades 5 are attached to a hub 6 which is connected with a wind turbine generator 7 by a shaft 8. A wind induced rotation of the hub 6 is transferred to the wind turbine generator 7 and the respective kinetic energy is converted into electrical energy by the wind turbine generator 7.

The wind turbine generator 7 is a heat producing component 9, wherein heat is produced by electrical currents in the wind turbine generator 7. Hence, the wind turbine generator 7 needs to be cooled, wherein, for this purpose, the offshore arrangement 1 comprises a cooling circuit 10 with a pump 11 for circulating a cooling fluid in the cooling circuit 10. The cooling circuit 10 and the wind turbine generator 7 are coupled such that heat is transferable from the wind turbine generator 7 to the cooling fluid. The cooling fluid is water, particularly filtered seawater 12, and/or glycol.

The cooling circuit 10 comprises a cooling duct 15 in which the cooling fluid is guided. The cooling duct 15 is buried in the seabed 13 such that heat is transferable from the cooling fluid to the seabed material. Hence, heat which has been produced by the component 9 and which has been transferred to the cooling fluid is expelled into the seabed 13. The cooling duct 15 leads at least 100 m, particularly at least 500 m, away from the remainder of the offshore arrangement 1, particularly from the tower 3 or a structural component 14 which will be described below. Hence, the greatest distance the cooling duct 15 and the remainder of the offshore arrangement 1 is at least 100 m, particularly at least 500 m. Because of this large distance, the heat is distributed over a large area of the seabed 13 in the vicinity of the offshore arrangement 1.

As becomes furthermore apparent from fig. 1, the offshore arrangement 1 comprises a structural component 14 being anchored in the seabed 13 and being exemplary a jacket foundation. Alternatively, the structural component 14 can be a monopile foundation, a tripod foundation or a gravity foundation positioned on the seabed 13. Although in fig. 1 the ducts of the cooling circuit 10 are indicated only schematically, the ducts which lead from the tower 3 to the seabed 13 can be attached to the lattice of the structural component 14.

To ensure a sufficient heat transfer from the cooling fluid to the seabed material, the cooling duct 15 is made of a material with a sufficient high thermal conductivity, exemplary of a composite material consisting of a plastic material and a metal, namely steel. According to another embodiment, the cooling duct 15 is made of a composite material comprising a plastic material and fibres, particularly fibreglass. Alternatively, the cooling duct 15 can be only made of a plastic material or a metal.

For coupling the component 9 with the cooling circuit 10, a heat exchanger 16 being a plate heat exchanger is provided. Alternatively, the component 9 can be directly in contact with a pipe of the cooling circuit 10 such that a direct cooling is realized. Furthermore, an ambient heat exchanger 17 is coupled with or part of the cooling circuit 10. The ambient heat exchanger 17 allows for transferring heat from the cooling fluid to the vicinity of the offshore arrangement 1. A fan 18 is provided for generating and ambient air current being directed to the ambient heat exchanger 17. The fan 18 is arranged on an inlet opening 19 of the nacelle 4, wherein an outlet opening 20 of the nacelle 4 is provided to allow the air current leaving the interior of the nacelle 4. Although this is not shown in the figures, heat can also be transferable to the seawater 12 by the ambient heat exchanger 17. For this, seawater 12 is be pumped into the ambient heat exchanger 17 by a seawater pump while the cooling fluid is also guided through the ambient heat exchanger 17. Subsequently, the heated seawater is guided back into the sea.

The operation of the ambient heat exchanger 17 or of the fan 18 and/or the seawater pump, respectively, can realize a booster cooling for the component 9. The booster cooling can be started if the cooling provided by the seabed material is not sufficient to sufficiently cool the component 9. For this, the temperature of the cooling fluid is measured by a temperature sensor, wherein, if this temperature is larger than a given threshold temperature, the operation of the ambient heat exchanger 17 is started, particularly automatically.

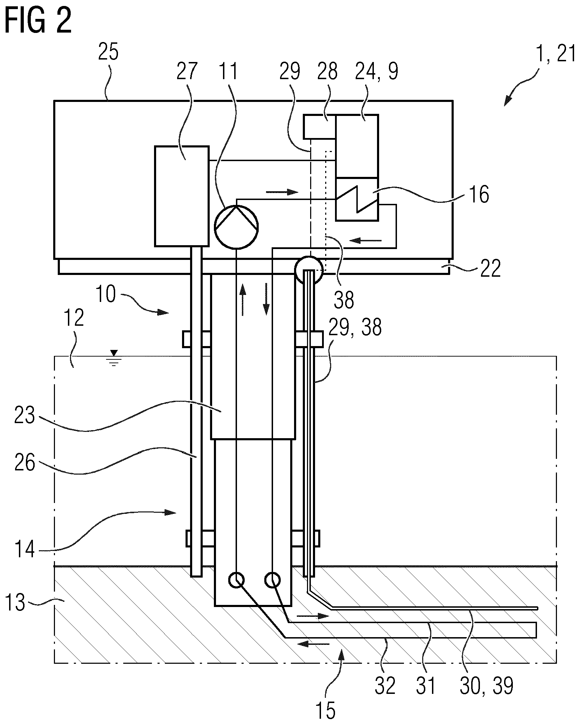

Fig. 2 shows an offshore arrangement 1 according to a second embodiment of the present invention. The offshore arrangement 1 shown in fig. 1 is a hydrogen production unit 21 with a platform 22 which is carried by the structural component 14. The structural component 14 is exemplary a monopile foundation which is connected with the platform 22 by a transition piece 23. The hydrogen production unit 21 comprises an electrolyzing device 24 for producing hydrogen which. The electrolyzing device 24 constitutes the heat producing component 9 and is arranged within a platform housing 25 which is arranged on the platform 22. Another component which is located in the platform housing 25 but which is not shown in the figures is a control unit for controlling the offshore arrangement 1. The electrolyzing device 24 is adapted to decompose water into oxygen and hydrogen gas by electrolysis using electrical energy. For this, seawater 12 is used, wherein the hydrogen production unit comprises a seawater intake pipe 26 which is used to guide seawater 12 to a water treatment component 27 being a desalination unit, wherein the desalinated seawater 12 is then guided to the electrolyzing device 24. The hydrogen which has been produced by the electrolyzing device 24 is a guided through a gas treatment component 28 and then to a hydrogen duct 29 leading to a hydrogen pipeline 30 which leads away from the offshore arrangement 1. The part of the hydrogen duct 29 being arranged in the platform housing 25 is indicated by a dashed line.

The hydrogen production unit 21 also comprises the cooling circuit 10 which is coupled with the component 9 or the electrolyzing device 24, respectively, by the heat exchanger 16. As it has been already described with the help of the first embodiment, a cooling duct 15 of the cooling circuit 10 is buried in the seabed 13. More precisely, the cooling duct 15 comprises a first section 31 leading the cooling fluid away from the structural component 14 and a second section 32 leading the cooling fluid back to the structural component 14. The sections 31, 32 are partially straight pipes and connected with each other by a bent connecting tube 33 having a U-shape.

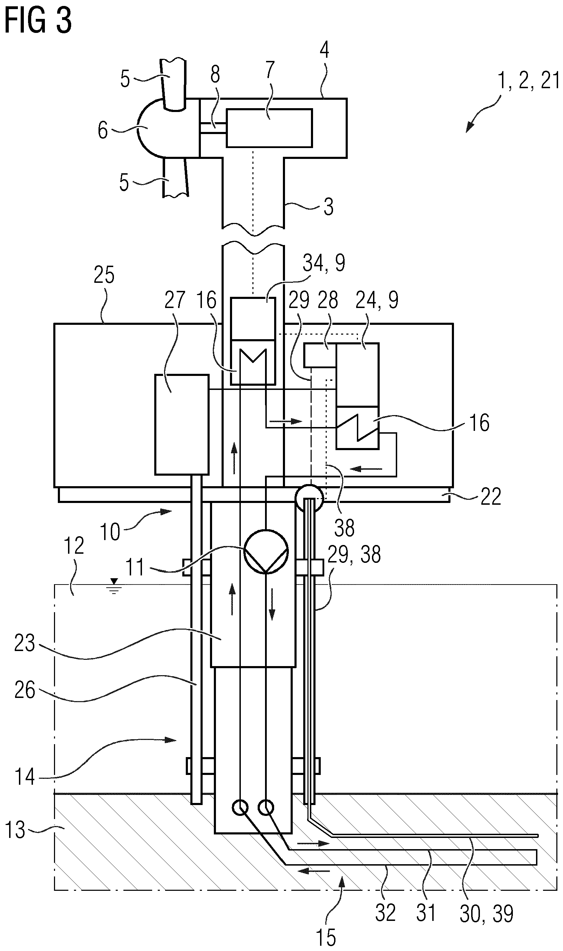

Fig. 3 shows an offshore arrangement 1 according to a third embodiment of the present invention. The offshore arrangement 1 shown in fig. 3 is a wind turbine 2 and a hydrogen production unit 21. The aspects which have been explained with the help of the embodiment shown in fig. 2 basically also hold true for the embodiment shown in fig. 3. However, in contrast to the embodiment of fig. 2, the respective offshore arrangement 1 additionally comprises the tower 3 with the nacelle 4, the hub 6 with the blades 5 and the wind turbine generator 7. The electric energy which is needed for the operation of the electrolyzing device 24 is provided by the wind turbine generator 7, wherein respective electric cables to connect these components are indicated by dotted lines.

The wind turbine generator 7 and the electrolyzing device 24 are electrically connected by a step-down transformer 34 which is adapted to transform a voltage from an output voltage of the wind turbine generator 7 to an operating voltage of the electrolyzing device 24. The step-down transformer 34 is also a heat producing component 9 of the offshore arrangement 1, which is connected with the cooling circuit 10 by a further heat exchanger 16. Hence, in the embodiment of fig. 3, the electrolyzing device 24 as well as the step-down transformer 34 is cooled by the cooling circuit 10. Although this is not the case in the embodiment of fig. 3, also the wind turbine generator 7 can be coupled with the cooling circuit 10, as it has been explained with the help of the embodiment of fig. 1.

All aspects which have been explained with the help of the embodiments of figures 1 to 3 can be transferred to the respective other embodiments. Particularly, this holds true for the aspects which have been explained with respect to the ambient heat exchanger 17 and to the sections 31, 32 of the cooling duct 15.

Regarding a concrete embodiment of the method according to the present invention, the respective method is related to the mounting of the offshore arrangements 1 shown in figures 1 to 3, wherein the method includes burying the cooling duct 15 in the seabed 13.

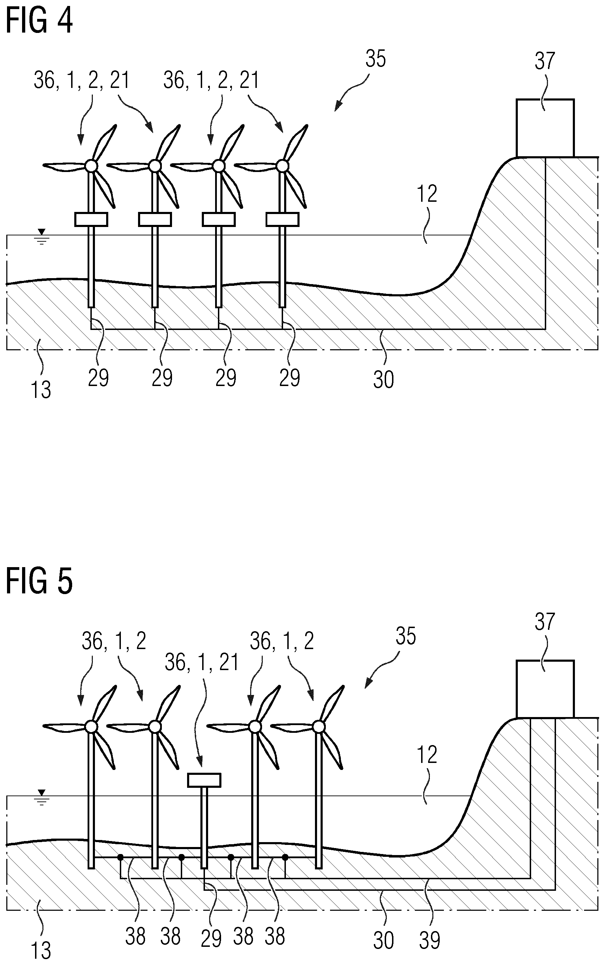

Next, referring to fig. 4, an offshore wind park 35 according to a first embodiment of the present invention is shown. The wind park 35 comprises several wind energy production units 36, each being an offshore arrangement 1, namely a wind turbine 2 and a hydrogen production unit 21 as it has been explained with the help of fig. 3. The hydrogen ducts 29 of the offshore arrangements 1 are connected with the hydrogen pipeline 30 which leads to an onshore station 37. Hence, the operation of the wind turbine generators 7 of the offshore arrangements 1 leads to the production of electrical energy, wherein this energy is used for the operation of the electrolyzing devices 24, wherein the hydrogen is then transferred to the land via the hydrogen pipeline 30.

Referring to fig. 5, an offshore wind park 35 according to a second embodiment of the present invention is shown. The wind park 35 comprises several wind energy production units 36, wherein one of these wind energy production units 36 is an offshore arrangement 1, namely a hydrogen production unit 21 as it has been explained with the help of fig. 2. The other wind energy production units 36 are wind turbines 2 according to the embodiment of the present invention which has been explained with the help of fig. 1. However, these wind energy production units can also be conventional wind turbines. The wind energy production units 36 are connected with each other by electrical cables 38 such that electric energy which has been produced by the wind turbine generators 7 of the wind turbines 2 can used for the operation of the electrolyzing device 24 of the hydrogen production unit 21. Apart from this, the electric cables 38 are connected with an electric wire 39 which leads to the onshore station 37. Hence, the electrical energy produced by the wind turbine generators 7 can be either transferred to the land or used for producing hydrogen. The hydrogen duct 29 of the hydrogen production unit 21 is connected with the hydrogen pipeline 30 which also leads to the onshore station 37.

Referring to the method according to the present invention again, the hydrogen duct 29 used for transporting produced hydrogen away from the respective offshore arrangement 1, particularly to the further offshore arrangements 1 of the respective wind park 35 or to the onshore station 37, and the electrical cable 38 used for electrically connecting the respective offshore arrangement 1 with the further offshore arrangements 1 of the respective wind park 35 or with the onshore station 37 gets buried in the seabed together with the cooling duct 15 of the respective offshore arrangement 1. In other words, the processes of burying the cooling duct 15, the hydrogen duct 29, and the electrical cable 38 takes place during a common or combined operation step. For this, seabed material is firstly removed such that a ditch or tray is created in the seabed 13, wherein the cooling duct 15, the hydrogen duct 29, and the electrical cable 38 of the respective offshore arrangement 1 are arranged parallel to each other in the ditch or tray which is subsequently filled with seabed material. The cooling duct 15 is positioned such that a lateral distance is provided between the cooling duct 15 and the hydrogen duct 29 as well as between the cooling duct 14 and the electrical cable 38.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Offshore arrangement being a wind turbine (2) and/or a hydrogen production unit (21), wherein at least one heat producing component (9) is coupled with at least one cooling circuit (10) such that heat is transferrable from the at least one component (9) to a cooling fluid circulating in the cooling circuit (10), wherein at least one cooling duct (15) of the cooling circuit (10) in which the cooling fluid is guided is buried in the seabed (13) such that heat is transferrable from the cooling fluid to the seabed material.

2. Offshore arrangement according to claim 1, **characterized in that** the cooling duct (15) leads at least 100 m, particularly at least 500 m, away from the remainder of the offshore arrangement (1).

3. Offshore arrangement according to claim 1 or 2, **characterized by** a structural component (14) being anchored in the seabed (13), particularly being a monopile foundation or a jacket foundation or a tripod foundation, or being a gravity foundation positioned on the seabed (13), wherein the cooling duct (15) comprises a first section (31) leading the cooling fluid away from the structural component (14) and a second section (32) leading the cooling fluid back to the structural component (14).

4. Offshore arrangement according to claim 3, **characterized in that** the first section (31) and the second section (32) each comprise at least one, particularly straight, pipe, wherein the first section (31) and the second section (32) are connected by a, particularly bent, connecting tube (33).

5. Offshore arrangement according to one of the preceding claims, **characterized in that** at least a part of the cooling duct (15) is made of a plastic material, particular of a composite material, and/or of a metal, particularly of steel.

6. Offshore arrangement according to one of the preceding claims, **characterized in that** the at least one component (9) is coupled with the at least one cooling circuit (10) by at least one heat exchanger (16), being particularly a plate heat exchanger, or that the at least one component (9) is directly in contact with a pipe of the cooling circuit (10) or with the cooling fluid such that a direct cooling is realized.

7. Offshore arrangement according to one of the preceding claims, **characterized in that** the heat producing component (9) is a wind turbine generator (7) or an electrolyzing device (24) for producing hydrogen or a transformer (34), particularly a step-down transformer which electrically connects a wind turbine generator (7) and an electrolyzing device (24) of the offshore arrangement (1) for transforming a voltage from an output voltage of the wind turbine generator (7) to an operating voltage of the electrolyzing device (24).

8. Offshore arrangement according to claim 7, **characterized in that** the heat producing component (9) being the electrolyzing device (24) is arranged on a platform (22), particularly being carried by the or a structural component (14), or that the heat producing component (9) being the wind turbine generator (7) is arranged within a nacelle (4), particularly being carried by a tower (3) being arranged on the or a structural component (14).

9. Offshore arrangement according to one of the preceding claims, **characterized in that** at least one ambient heat exchanger (17) is coupled with the cooling circuit (10) such that heat is transferrable from the cooling fluid to the vicinity of the offshore arrangement (1), particularly to sea water (12) or air, by the ambient heat exchanger (17).

10. Method for mounting an offshore arrangement (1) being an offshore wind turbine (2) and/or an offshore hydrogen production unit (21), wherein at least one heat producing component (9) of the offshore arrangement (1) is coupled with at least one cooling circuit (10) such that heat is transferrable from the at least one component (9) to a cooling fluid circulating in the cooling circuit (10), wherein at least one cooling duct (15) of the cooling circuit (10) in which the cooling fluid is guided gets buried in the seabed (13) such that heat is transferrable from the cooling fluid to the seabed material.

11. Method according to claim 10, **characterized in that** at least one hydrogen duct (29) used for transporting produced hydrogen away from the offshore arrangement (1) and/or that at least one electrical cable (38) used for electrically connecting the offshore arrangement (1) with other facilities gets buried in the seabed (13) together with the at least one cooling duct (15).

12. Offshore wind park comprising several wind energy production units (36), wherein at least one of the wind energy production units (36) is an offshore arrangement according to one of the claims 1 to 9.
